# EUROPEAN PATENT APPLICATION

(11) **EP 2 990 899 A1**
(43) Date of publication of application: **02.03.2016**
(21) Application number: 13882710.0
(22) Date of filing: 26.04.2013
(51) Int. Cl.: G05B 23/02

(54) **CONTROL SYSTEM INSPECTION DEVICE**

(71) Applicant: Hitachi, Ltd., Chiyoda-ku Tokyo 100-8280 (JP)
(72) Inventor: ISHIGOKA Tasuku, Tokyo 100-8280 (JP)
(74) Representative: MERH-IP Matias Erny Reichl Hoffmann Patentanwälte PartG mbB
(86) International application number: PCT/JP2013/062320
(87) International publication number: WO 2014/174656

(57) **Abstract**

An object of the present invention is to provide a control system inspection device capable of comprehensively inspecting safety of a control system under a variety of hypothetical circumstances. The present invention is a control system inspection device that inspects the safety of a control system including a simulator that simulates a plant imitating an inspection object based on a predetermined condition and externally outputs a simulation result and a model inspection tool that generates information about states that can be assumed by the plant next based on the simulation result using a verification model and outputs the information to the simulator, wherein the predetermined condition for the simulation is set based on the information.

## Description

### Technical Field

The present invention relates to a technology to inspect safety of a control system.

### Background Art

Many vehicles systems in recent years are controlled by ECU, that is, an electronic control unit that operates computerized vehicle control devices. With increasing complexities and higher safety standards of vehicle systems, increased development man-hours to maintain software quality pose a problem.

Software of ECU is run on a microcontroller (micon) mounted with an arithmetic unit (CPU) and periodically acquires the value of a sensor connected to ECU from an analog/digital conversion (ADC) module attached to the microcontroller. A safety function by software is mounted as countermeasures against an occurrence of abnormal conditions such as a failure of the sensor, noise, and erroneous detection by the sensor. As an example of the safety function, the sensor value acquired currently (this-time value) and the sensor value acquired in the last control period (last-time value) are compared and the difference (variation) equal to or more than a fixed value is considered to be abnormal and when an abnormal condition arises, the variation is set to a fixed value determined when the system is designed. If such an abnormal condition continues for a fixed time, failsafe measures to make the system safe such as stopping the system are taken.

In recent years, a hardware in the loop simulation (HILS) for the purpose of improving development efficiency by conducting a test of a portion of software of ECU dependent on vehicles in an early development stage to reduce reworking of development. HILS enables testing of a vehicle dependent portion of software of ECU without providing an actual vehicle by designing physical properties of the vehicle as a plant model, imitating behavior of an actual vehicle by a simulation on a computer, and performing data communication in real time by running the computer and ECU in parallel.

In PTL 1 below, a test of the safety function of software running on a microcontroller is enabled by causing a failure of a plant model in timing set by a verifier.

### Citation List

### Patent Literature

PTL 1: JP Patent Publication (Kokai) 2011-161947 A

### Summary of Invention

### Technical Problem

In PTL 1, however, conditions for causing a failure are individually set by the verifier and safety of a control system is inspected by causing an abnormal event when the conditions are satisfied. However, abnormal events occur in unexpected timing and if the verifier individually sets conditions for causing a failure, it is highly probable that some test patterns are omitted and the conventional method is not suitable for comprehensive inspection of the safety of a control system.

Thus, an object of the present invention is to provide a control system inspection device capable of comprehensively inspecting the safety of a control system under a variety of hypothetical circumstances.

### Solution to Problem

The present invention is a control system inspection device that inspects safety of a control system including a simulator that performs a simulation of a plant imitating an inspection object based on predetermined conditions and externally outputs a simulation result and a model inspection tool that generates information about states that can be assumed by the plant next based on the simulation result using a modification model and outputs the information to the simulator, wherein the predetermined conditions for the simulation are set based on the information.

### Advantageous Effects of Invention

According to the present invention, the safety of a control system under a variety of hypothetical circumstances can comprehensively be inspected.

### Brief Description of Drawings

[FIG. 1] FIG. 1 is a block diagram of a control system inspection device according to the present embodiment.
[FIG. 2] FIG. 2 illustrates a structure of the control system inspection device and a flow of data.
[FIG. 3] FIG. 3 illustrates an example of a safety condition.
[FIG. 4] FIG. 4 illustrates an example of an execution path.
[FIG. 5] FIG. 5 illustrates an example when an inspection result is displayed in a display device.
[FIG. 6] FIG. 6 illustrates another example when an inspection result is displayed in the display device.
[FIG. 7] FIG. 7 illustrates an operation flow of the control system inspection device.
[FIG. 8] FIG. 8 illustrates an example of a verification model of a control system.
[FIG. 9] FIG. 9 illustrates an example of a plant model of the control system.
[FIG. 10] FIG. 10 illustrates an example of states that can be assumed by the control system.

### Description of Embodiment

A control system verification device according to the present embodiment updates the state of a plant based on an input plant model in each time step in a simulation, determines safety of the state of the plant based on the input safety condition, and if the state of a plant is determined to be safe, the control system converts sensor values of the plant into a format identifiable by an input verification model, executes a model inspection tool that verifies a verification model using converted sensor values as initial values, converts control command values and a failure occurrence output by the verification model after the model inspection tool terminates into a format identifiable by a simulator, restarts the simulation, and continues the inspection until an elapsed time in the simulator does not satisfy an inspection condition. If the plant state is determined to be unsafe, logs which have been executed are notified and if the plant state is terminated by satisfying the inspection condition, the effect that the plant state is safe is notified.

Hereinafter, an embodiment of the present invention will be described using the drawings.

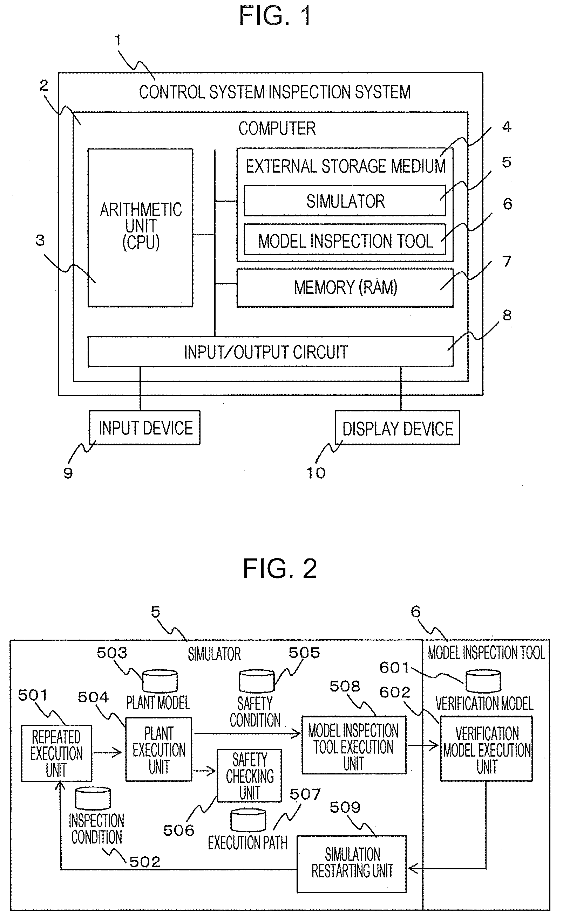

FIG. 1 is a block diagram of a control system inspection device 1 according to the present embodiment. The control system inspection device 1 includes a computer 2, an input device 9 into which an inspector does input to give instructions to the computer 2, and a display device 10 that displays an inspection result. The computer 2 includes an arithmetic unit 3 such as a CPU, an external storage medium 4, a memory 7, and an input/output circuit 8. The external storage medium 4 stores a simulator 5 and a model inspection tool 6. The input/output circuit 8 acquires information about an instruction input from the input device 9 and provides information output to the display device 10.

FIG. 2 is a block diagram illustrating the configuration of the control system inspection device 1 and the flow of data. An inspection condition 502, a plant model 503, a safety condition 505, and a verification model 601 are input into the control system inspection device 1 from the input device 9 by the verifier.

The inspection condition 502 is a condition for terminating the inspection of the control system inspection device 1 and is specified as a virtual time (for example, 10 min) that has elapsed in the simulation. However, the inspection condition 502 is not limited to such an example and may be, for example, the number of times of simulation or a combination of the time and the number of times.

The plant model 503 is a model showing physical properties of a control object that change in accordance with input and is used to apply a model-based development technique utilizing a simulator such as Simulink (registered trademark) of Matlab (registered trademark) and described in general as a polynomial.

The verification model 601 is a model imitating software that controls hardware to be controlled and user's operations. More specifically, the verification model 601 is a software program written in the notation of state transitions and is executed by a model inspection tool such as SPIN. For the sake of description, the first embodiment is intended for verification models written in the form of direct state transitions, but the present embodiment is not limited to such an example. For example, a model inspection tool such as Efficient SMT-Based Context-Bounded Model Checker (ESBMC) that performs verification after automatic conversion of input source code into a state transition model may also be used.

The control system inspection device 1 includes the simulator 5 and the model inspection tool 6. The simulator 5 is used to simulate a plant imitating an inspection object based on predetermined conditions and to externally output a simulation result and includes a repeated execution unit 501, a plant execution unit 504, a safety checking unit 506, a model inspection tool execution unit 508, and a simulation restarting unit 509. For the same of description, the present embodiment adopts the above structure, but is not limited to such an example.

The repeated execution unit 501 compares the input inspection condition and the time inside the simulator to determine whether the termination condition is satisfied. The plant execution unit 504 simulates a plant based on predetermined conditions. The safety checking unit 506 determines whether the plant state after the simulation is safe. The model inspection tool execution unit 508 converts output of the plant output from the plant execution unit 504 into a format identifiable by the model inspection tool 6 and operates the model inspection tool 6. The simulation restarting unit 509 converts a verification model output by the model inspection tool 6 into a format identifiable by the plant to restart the simulation.

The plant is an imitation of the inspection object and in the present embodiment, imitates a vehicle as hardware including an actuator and a sensor used to operate the actuator. Further, the plant in the present embodiment includes, in addition to the vehicle, the form (straight/curved) of a road on which the vehicle travels. In the simulator 5, a simulation result of such a plant is concretely a detection value of the sensor of the plant. In the present embodiment, a plant in which an abnormal event occurs and a plant in which no abnormal event occurs are included and the plant can be switched based on the output of the verification model.

The model inspection tool 6 generates information about states that can be assumed by the plant next based on a simulation result (more specifically, the plant state after performing a simulation) using a verification model and outputs the information to the simulator 5. Hereinafter, "information about states that can be assumed by the plant next" described above may be abbreviated as "state related information". Such information is output in the form of signal and can also be identified as a "signal related to states that can be assumed by the plant next" or "state related signal". Then, in the present embodiment, the verification model generates a plurality of pieces of state related information of different abnormal event occurrence states of the plant (that is, state related information in which an abnormal event occurs in the plant and state related information in which no abnormal event occurs in the plant). Also, state related information generated by a verification model in the present embodiment includes an actuator control command value determined based on a sensor value input from the simulator 5.

The model inspection tool 6 is used to output state related information generated by a verification model and thus, it is necessary to select which piece of the state related information to simulate in the next time step. The function to select the state related information is included in the simulation restarting unit 509. In the control system inspection device 1, which of a plurality of pieces of state related information is selected (that is, simulated) and which piece is unselected is managed. Then, when a series of simulations is completed, the control system inspection device 1 performs a simulation based on state related information that is not yet selected. The state related information may be managed by the simulation restarting unit 509, a management block provided separately in the simulator 5, or a management unit provided outside the simulator 5.

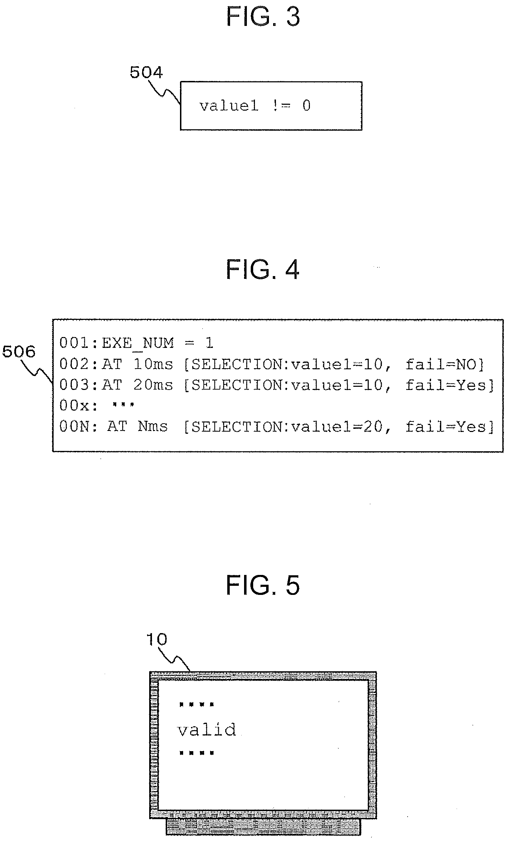

FIG. 3 illustrates an example of the safety condition 505. In the safety condition 505, a threshold to determine whether the control system to be inspected is safe written. For example, the threshold is set that a variable name value 1 is always different from 0, but the threshold is not limited to such an example. The safety condition 505 may be changed in accordance with the plant or the verification model. In addition, the variable name is not limited to an output signal of the plant. If, for example, state related information output by the model inspection tool contains information about safety, the information may be used to determine whether the system is safe or a verification result (valid or invalid) of the model inspection tool may be set as a condition for determining whether the system is safe.

FIG. 4 illustrates an example of an execution path 507. The execution path 507 records information allowing the viewer to grasp the flow of execution of the control system to be inspected during inspection. In the present embodiment, the inspection numbers, the actuator control command value output by the selected verification model 601 in each time of a failure occurrence to be inspected, and values selected from failure occurrence information are chronologically stored. For convenience of description, the above information is stored in the present embodiment, but the present embodiment is not limited to such an example. Also, the notation is not limited to such an example.

FIG. 5 is an example of displaying an inspection result in the display device 10 when the safety condition 505 is satisfied. However, the display method may be different from the method illustrated in FIG. 5. The inspection result is not limited to one displayed in the display device 10 and may be output in a file format without being displayed in the display device 10.

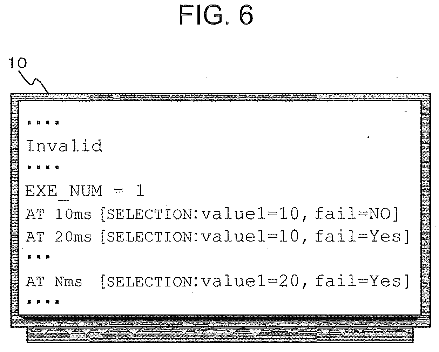

FIG. 6 illustrates an example of displaying an inspection result in the display device 10 when the safety condition 505 is not satisfied. However, the display method may be different from the method illustrated in FIG. 6. The inspection result is not limited to one displayed in the display device 10 and may be output in a file format without being displayed in the display device 10. Further, the content of the execution path 507 is displayed in the display device 10 in the example of FIG. 6, but the present embodiment is not limited to such an example and the inspection result may be output in a file format without the content of the execution path 507 being displayed in the display device 10.

In the control system inspection device 1 as described above, output of a simulation result by the simulator 5, generation and output of state related information by the model inspection tool 6, and settings of predetermined conditions for a simulation based on the state related information are repeated in each predetermined time step set in the simulator 5. Here, the predetermined time step is the execution time unit of the simulation and can be set by the verifier in the time of, for example, 1 msec or more. That is, in the control system inspection device 1, when the simulator 5 performs a simulation for predetermined time steps, the model inspection tool 6 determines state related information about the state of the next plant based on the simulation result and the simulator 5 updates conditions for the simulation in the next time step based on the state related information to restart the simulation. Thus, the control system inspection device 1 has a function to synchronize the time of the plant of the simulator 5 and that of the verification model of the model inspection tool 6. Then, the control system inspection device 1 generates state related information different in abnormal event occurrence of the plant in each time step and thus, a simulation that satisfactorily covers timings of failure occurrence to be verified can be performed.

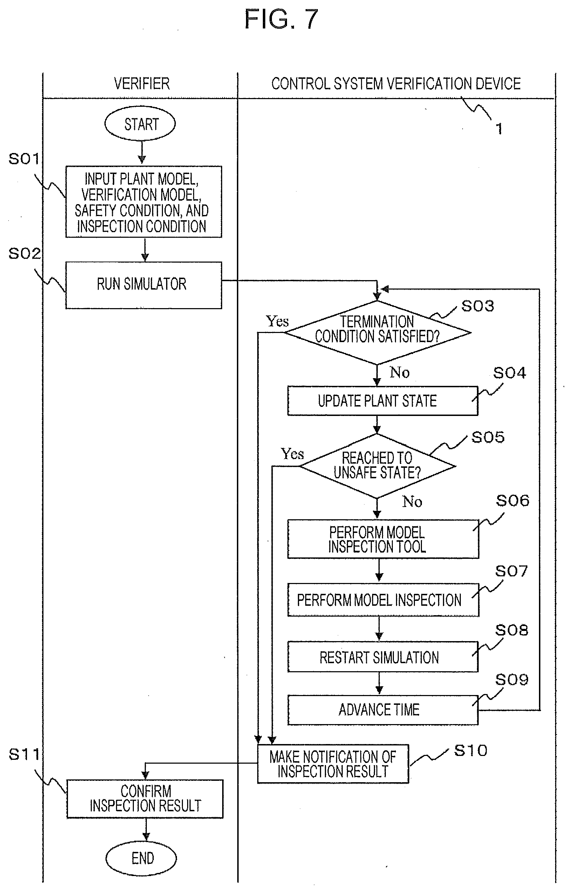

FIG. 7 illustrates the flow when an inspector uses the control system inspection device 1. Hereinafter, each step in FIG. 7 will be described.

In step S01, the verifier inputs the plant model 503, the verification model 601, the safety condition 505, and the inspection condition 502 into the control system inspection device 1.

In step S02, the verifier runs the simulator.

In step S03, the repeated execution unit 501 of the control system inspection device 1 compares the input inspection condition and the time inside the simulator to determine whether the termination condition is satisfied. If the termination condition is satisfied, the process proceeds to S10. If the termination condition is not satisfied, the process proceeds to S04. It is assumed that the time inside the simulator advances by the unit time step (for the timing of the failure occurrence to be verified) each time the repeated execution unit is executed. For convenience of description, a comparison is made with the time inside the simulator in the first embodiment, but the present embodiment is not limited to such an example. For example, a new program may be created outside the simulator to adopt a termination condition that compares with the program.

In step S04, the plant execution unit 504 of the control system inspection device 1 switches a plant model imitating a failed plant and a plant model imitating a normal plant based on information about failure occurrence output by the verification model and updates the plant state based on the input plant model.

In step S05, the safety checking unit 506 of the control system inspection device 1 determines whether an unsafe state is reached by comparing the safety condition 505 and output information of the corresponding plant or output information of the verification model. If an unsafe state is reached, the process proceeds to S10. If an unsafe state is not yet reached, the process proceeds to S06.

Information capable of identifying the operation of a control system to be verified is stored in the execution path as a log. In this case, information is stored in the form of addition so that chronological changes of the control system are evident. Information to be stored includes, for example, the time that can identify the timing of storage, plant output at that time, the output value of the selected verification model, and the number of times of simulation. For convenience of description, such information is stored as a log in the present embodiment, but the present embodiment is not limited to such an example as long as information makes chronological changes of the control system evident when an unsafe state is revealed.

In step S06, the model inspection tool execution unit 508 of the control system inspection device 1 converts sensor values of the plant model 503 into a format identifiable by the verification model 601 and executes the model inspection tool. At this point, the simulator is temporarily stopped until the execution of the model inspection tool terminates. For example, according to the verification model designed to read a sensor value from text outside, a process to write a sensor value of the plant model 503 into the text is performed and then, the model inspection tool is executed. At this point, a condition (property) to verify the verification model may or may not be attached to the model verification tool. For convenience of description, the first embodiment adopts the above method, but the present embodiment is not limited to such an example.

In step S07, a verification model execution unit 602 of the control system inspection device 1 verifies the input verification model 601 using the model inspection tool 6. The verification model 601 imitating control software externally outputs an actuator control command value as output of the control software and information about a failure occurrence in a state search process during execution of the model inspection tool.

The verification model 601 is designed to be nondeterministic with respect to the actuator control command value and the value of failure occurrence. Nondeterminism is a property in which the next state is not uniquely determined. In addition, nondeterminism may include the presence/absence of user's operation or the strength of operating force, the presence/absence of sensor noise, the presence/absence of an interrupt of other control software and the like. For convenience of description, the first embodiment adopts the above method, but the present embodiment is not limited to such an example.

In step S08, the simulation restarting unit 509 of the control system inspection device 1 is executed after the execution of the model inspection tool 6 terminates and receives the actuator control command value and the information about failure occurrence output from the model inspection tool 6 by the simulator. For example, the verification model is designed to output the output value of the verification model to a command prompt screen in advance and the simulator analyses an output signal for screen output and extracts relevant information. The actuator control command value is set as an input signal of the plant model and the information about failure occurrence is used to determine whether the termination condition in S04 is satisfied. For convenience of description, the first embodiment adopts the above method, but the present embodiment is not limited to such an example. If the verification model is designed to be nondeterministic, the actuator control command value and the information about failure occurrence are output in a plurality of patterns. In such a case, one actuator control command value and one piece of information about failure occurrence are selected. The method of selection does not matter.

In step S09, the repeated execution unit 501 of the control system inspection device 1 advances the time inside the simulator.

In step S10, if moved from S03, information indicating that the safety condition as illustrated in FIG. 5 is satisfied is notified by the repeated execution unit 501 of the control system inspection device 1. For example, valid indicating that the safety condition is satisfied is displayed in the display device 10. If moved from S05, information indicating that the safety condition as illustrated in FIG. 6 is not satisfied is notified by the safety checking unit 506 of the control system inspection device 1. At this point, the content of the execution path 507 is also notified. For example, invalid indicating that the safety condition is satisfied and the content of the execution path 506 are displayed in the display device 10. For convenience of description, the first embodiment adopts the above method, but the present embodiment is not limited to such an example.

In step S11, the verifier confirms the notified inspection result. For example, the verifier confirms the inspection result displayed in the display device 10.

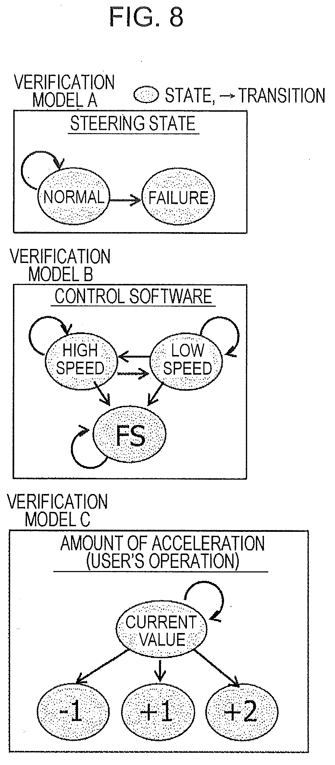

FIG. 8 illustrates an example of the verification model 601. In this example, the verification model 601 includes a verification model element A, a verification model element B, and a verification model element C.

The verification model element A is a verification model element illustrating the state of steering. A "normal" state has the possibility of making the transition to the "normal" state or a "failed" state. The verification model element A has a function to output the state of steering in each state out of the model inspection tool 6.

The verification model element B is a verification model element illustrating the mode of control software. The control software makes the transition to a "high-speed" state or a "low-speed" state in accordance with the current plant speed. If the steering fails, the control software makes the transition to a "failsafe (FS)" state. For example, the amount of assist of the steering is small in the "high-speed" state, the amount of assist of the steering is large in the "low-speed" state, and in the "FS" state, a process of setting the amount of assist of the steering to 0 by issuing an alarm notifying the user of a steering failure can be considered, but the present embodiment is not limited to such an example. The verification model element B has a function to output the amount of assist of the steering out of the model inspection tool.

The verification model element C is a verification model element illustrating the amount of acceleration when the user performs an operation. A "current value" state has the possibility of making the transition to the "current value" state, a "-1" state, a "+1" state, or a "+2" state. The "current value" state illustrates the amount of acceleration of the input value and the "-1" state indicates a decrease of the amount of acceleration and the "+1" state and the "+2" state indicate an increase of the amount of acceleration. The verification model element C has a function to output the amount of acceleration out of the model inspection tool 6. For convenience of description, an accelerator pedal operation and the amount of acceleration calculated by the control software based on the accelerator pedal operation are represented by one verification model element in the present embodiment, but the present embodiment is not limited to such an example.

These models are generated each time the model verification tool 6 is executed and the initial state is determined based on the input value. For convenience of description, the present embodiment adopts the above method, but is not limited to such an example. Also for convenience of description, the verification model is described in the notation of state transitions in the present embodiment, but the present embodiment is not limited to such an example. For example, the state transition may be written by text. Further, the content of the verification model is not limited to the above example. Also, the number of modification models may be one, or two or more.

If the state related information generated by the verification model 601 is described using the example in FIG. 8, when the steering is in the normal state, there are 12 states combining four states of the amount of acceleration and three states of the control software and two of the 12 states can be illustrated as "steering: normal, amount of acceleration: current value, control software: high speed" and "steering: normal, amount of acceleration: -1, control software: high speed". When the steering is in a failed state, the control software is normally controlled to be FS and thus, compared with the normal state of the steering, the number of combinations (that is, the state related information) decreases.

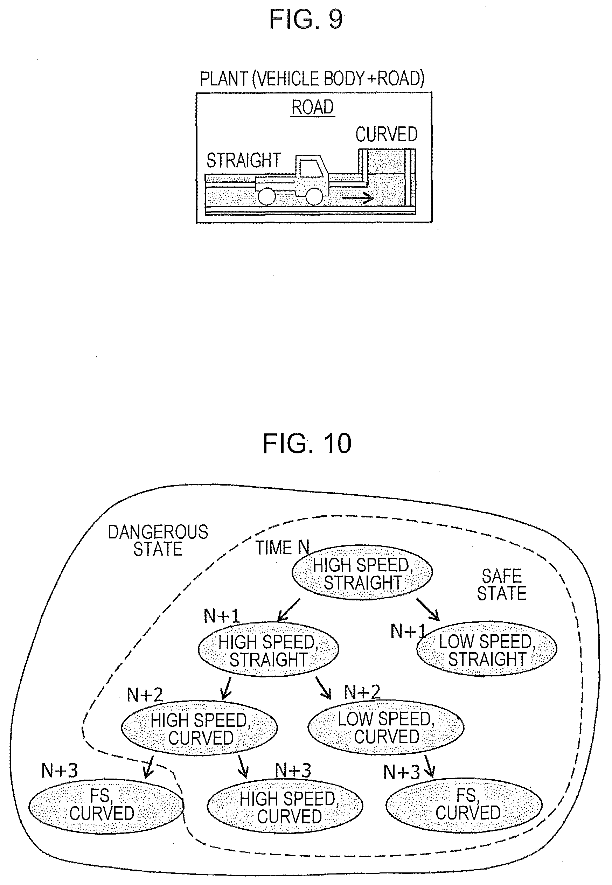

FIG. 9 illustrates an example of the plant model 503. The plant model 503 is made of a model imitating a vehicle body and a road. The steering in a normal state or the steering in a failed state is selected for the vehicle body depending on the state of the steering selected by the simulation restarting unit 509 and the vehicle state is updated by actuator control based on the amount of assist and the amount of acceleration of the steering. The position of the vehicle on the road is updated in accordance with the distance traveled by the vehicle.

FIG. 10 illustrates an image of states that can be assumed by the control system. FIG. 10 illustrates that state transitions occur as the time inside the simulator advances. If, for example, the vehicle in the plant model is in a "high-speed" state and the road is in a "straight" state at time N, at time N+1, the vehicle may be in a "high-speed" state and the road may be in a "straight" state, the vehicle may be in a "low-speed" state and the road may be in a "straight" state, or though omitted in FIG. 10, the road may be "curved". When the control system inspection system 1 is used, it may become clear that a dangerous state arises if the steering changes to a "failed state" state at time N+3.

According to the control system inspection device 1 in the present embodiment, as described above, the safety of a control system can be inspected by combining a simulation and a model inspection tool and thus, the safety of the control system can comprehensively be inspected under a variety of hypothetical circumstances. Therefore, the omission of test patterns that may arise when the verifier sets the timing at which a failure is caused can satisfactorily be prevented. Also according to the control system inspection device 1, when a hardware failure occurs, software including a safety function can easily check the safety such as checking whether the target system can be maintained in a safe state.

In PTL 1, the same test time as in reality is needed to execute software on a microcontroller and when, for example, a test that needs 1 sec each time is repeated 10,000 times, at least 10,000 sec is needed to complete the test, but according to the control system inspection device 1, the test can be made faster. Also in PTL 1, the acquisition of a microcontroller is required and if no microcontroller can be acquired in an early stage of development, the method thereof cannot be applied, but according to the control system inspection device 1, the safety can be inspected even if no microcontroller is actually present.

In the present embodiment, nondeterminism of the verification model is applied to a user's operation related to the calculation of an actuator control command value and a failure occurrence of hardware, but the present embodiment is not limited to such an example. For example, nondeterminism of the verification model may be applied to sensor noise.

### Reference Sign List

- 1: control system inspection system
- 2: computer
- 3: arithmetic unit
- 4: external storage medium
- 5: simulator
- 6: model inspection tool
- 7: memory
- 8: input/output circuit
- 9: input device
- 10: display device
- 501: repeated execution unit
- 502: inspection condition
- 503: plant model
- 504: plant execution unit
- 505: safety condition
- 506: safety checking unit
- 507: execution path
- 508: model inspection tool execution unit
- 509: simulation restarting unit
- 601: verification model
- 602: verification model execution unit

## Claims

1. A control system inspection device that inspects safety of a control system, the device comprising:
a simulator that simulates a plant imitating an inspection object based on a predetermined condition and externally outputs a simulation result; and
a model inspection tool that generates information about states that can be assumed by the plant next based on the simulation result using a verification model and outputs the information to the simulator, wherein
the predetermined condition for the simulation is set based on the information.

2. The control system inspection device according to claim 1, wherein output of the simulation result by the simulator, generation of information by the model inspection tool and output of the information, and settings of the predetermined condition for the simulation based on the information output are repeated in each predetermined time step set by the simulator.

3. The control system inspection device according to claim 1, further comprising: a safety checking unit that determines the safety of the control system based on at least one of the state of the plant and the output information.

4. The control system inspection device according to claim 1, further comprising: the verification model that reads output information of the plant from an external file other than a file in which the verification model is written as an input value.

5. The control system inspection device according to claim 1, wherein the verification model generates a plurality of pieces of information different in abnormal event occurrence states of the plant.

6. The control system inspection device according to claim 1, wherein
the plant is hardware including an actuator and a sensor used to operate the actuator, and
the simulator outputs a detection value of the sensor to the model inspection tool as the simulation result.

7. The control system inspection device according to claim 1, wherein
the plant is hardware including an actuator and a sensor used to operate the actuator, and
the verification model generates a plurality of pieces of information different in failure states of the hardware and outputs the information to the simulator.

8. The control system inspection device according to claim 7, wherein information output from the model inspection tool includes an actuator control command value determined based on the sensor value input from the simulator.

9. The control system inspection device according to claim 1, wherein the verification model is written in a notation indicating state transitions.

10. The control system inspection device according to claim 1, further comprising: an information selection unit that selects, when a plurality of pieces of information is output from the model inspection tool as information about different states that can be assumed next by the plant, the information to be used for a next simulation from the plurality of pieces of output information.

11. The control system inspection device according to claim 1, further comprising:
a model inspection tool execution unit that converts output of the plant into a format identifiable by the model inspection tool to operate the model inspection tool; and
a simulation restarting unit that converts information output by the model inspection tool into a format identifiable by the plant to restart the simulation.

12. The control system inspection device according to claim 11, wherein at least one of data converted into an identifiable format is stored in an external file.
